# FASCICULE DE BREVET EUROPEEN

(11) **EP 0 358 541 B1**
(45) Date de publication et mention de la délivrance du brevet: **10.02.1993**
(21) Numéro de dépôt: 89402178.1
(22) Date de dépôt: 01.08.1989
(51) Int. Cl.: B60P 1/64

(54) **Dispositif de levage et de verrouillage d'une charge ou d'une benne sur un véhicule**
Hub- und Verriegelungsvorrichtung für eine Last oder einen Behälter auf einem Fahrzeug
Device for lifting and locking a load or a bucket on a vehicle

(30) Priorité: 09.09.1988 FR 8811782
(43) Date de publication de la demande: 14.03.1990
(73) Titulaire: Gruelles, Maurice, F-77000 Melun (FR)
(72) Inventeur: Gruelles, Maurice, F-77000 Melun (FR)
(74) Mandataire: Barre, Philippe

(56) Documents cités:
- EP-A- 0 014 513
- DE-U- 7 718 760
- DE-U- 8 410 485
- GB-A- 2 092 993

## Description

L'invention concerne un dispositif de levage associé à un véhicule utilitaire pour la manoeuvre et le vérrouillage d'une charge.

Les dispositifs de manoeuvre à bras articulés qui équipent les camions ont en premier lieu pour but de mouvoir une benne, chargée ou non; c'est à dire la prendre au sol pour la disposer sur un camion, et la manoeuvre inverse. Enfin lorsque la benne est pleine, permettre une inclinaison bras-benne pour le vidage de la charge.

Les dispositifs les plus connus à ce jour comprennent un basculeur inférieur articulé à l'arrière du camion un bras de levage intermédiaire et un bras d'accrochage avant qui se termine par un crochet de préhension adapté pour prendre l'avant d'une benne, un ou plusieurs vérins sont associés entre le chassis du camion et le bras de levage pour permettre de conjuger de façon appropriée les divers mouvements de manoeuvre. Le bennage s'éffectuant en vérrouillant le basculeur inférieur ou chassis de la benne pour pivoter solidairement sur l'articulation arrière.

Ainsi le document DE-U-7 718 760 décrit un dispositif de levage et de vérrouillage associé au chassis d'un véhicule porteur comprenant un basculeur articulé par son extrémité arrière, à l'arrière du chassis, suivi à son autre extrémité d'un bras intermédiaire articulé et d'un bras avant avec son crochet de préhension également articulé, un vérin d'actionnement en mouvement angulaire longitudinal disposé entre le bras intermédiaire et le bras avant, des parties articulées sur le basculeur pourvues de doubles crochets assurant l'accrochage soit sur le chassis du véhicule soit sur le chassis de la benne actionnées chacune par un vérin disposé transversalement.

Les dispositifs les plus utilisés ont été conçu avec une cinématique apte à n'éffectuer que des manoeuvres de bennes en forme de caisse-avec des angles droit, soudées sur divers chassis standard. Ansi au fil des années, se trouvent mélangées sur un môme parc des bennes longues et courtes, évasées ou droites. Ces bennes sont montées sur des chassis en profilés en I ou en U disposés aussi bien avec des ailes intérieures qu'extérieures à tel point que la manoeuvre et le transport de ces bennes est devenu dans certains cas très délicat sur le plan de la sécurité.

La présente invention se propose d'apporter une solution aux problèmes ci-dessus posés et de fournir un dispositif perfectionné de manoeuvre, apte à assurer les vérrouillages appropriés pour réaliser des opération de pose, de dépose de transport et de bennage dans de bonnes conditions de sécurité.

Un autre objectif de l'invention est d'accroitre les possibilités du dispositif en lui permettant de charger aussi bien des charges que des bennes courtes ou longues, évasées et droites.

Selon une première caractéristique l'invention à pour objet un dispositif de levage et de vérrouillage associé au chassis d'un véhicule porteur de benne, du type comprenant au moins un basculeur articulé par son extrémité arrière, à l'arrière du chassis suivi à son autre extrémité d'un bras intermédiaire articulé et d'un bras avant avec son crochet de préhension également pourvu d'une articulation, un vérin d'actionnement en mouvement angulaire longitudinal disposé entre le bras intermédiaire et le bras avant, des moyens de vérrouillage solidaires du basculeur pourvus de part et d'autre, de parties d'accrochage à double crochet soit sur le chassis de la benne soit sur le chassis du véhicule actionnés par un moyen de puissance disposé transversalement, caractérisé en ce que le système de vérrouillage est constitué par la combinaison du double crochet avec un crochet simple, articulé sur un même plan en vis à vis et relié à leur partie haute par un moyen de puissance simultané permettant la prise de profilés en I ou en U, ce qui procure une fermeture simultanée de droite et gauche s'autocentrant sur la diversité des profilés constituant les chassis de benne.

Selon d'autres caractéristiques, le crochet simple et le crochet double articulés sur le même plan en vis à vis sur la partie extérieure du basculeur, sont associé à une biellette articulée: à sa partie inférieure dans le crochet double, à sa partie supérieure à la partie supérieure d'un balancier lui même articulé à un point intermédiaire dans le crochet simple, la partie inférieure de ce dit balancier est articulée à un vérin à double éffet pour actionner le mécanisme vers deux situations.

L'une où le bec inférieur du double crochet pince le bord supérieur du chassis du véhicule porteur le bec du crochet supérieur et le bec du crochet simple sont alors en position de libérer la benne pour autoriser les différentes manoeuvres avec le bras intermédiaire et le crochet de préhension.

L'autre où le bec supérieur du double crochet et le bec du crochet simple sont rapprochés dans un mouvement inverse pour pincer une aile d'un chassis de benne en profilé en U s'il est tourné ailes intérieures il est pincé par le bec du crochet simple, s'il est tourné ailes extérieures il est pincé par le bec supérieur du crochet double pendant que le bec inférieur du mème crochet libère le bord supérieur du chassis du véhicule porteur.

S'il sagit d'un chassis de benne en profilé en I les deux ailes sont pincées en mème temps par le bec supérieur du double crochet et le bec du crochet simple.

Selon un second mode de réalisation le fonctionnement du crochet double et de son vis à vis le crochet simple, est obtenu sous l'action d'un vérin court à double éffet attelé directement sur les deux crochets, donnant ainsi une autonomie à un bloc de vérrouillage pour ètre disposé de part où d'autre du basculeur inférieur.

Il est à noter que les moyens de manoeuvre longitudinale de la membrure avant avec son crochet de préhension ne sont pas surajoutés pour les besoins de l'invention. Ces moyens équipent déjas beaucoup de dispositifs existant afin de manoeuvrer des bennes traditionnelles de longueurs différentes grâce à la faculté de recul du crochet de préhension.

L'invention profite donc d'équipements et de procédures maintenant devenues classiques, pour accroitre les possibilitées de levage et de manoeuvre et d'augmenter les action de vérrouillage et de sécurité d'exécution sans aucune complication structurelle.

Par ailleurs, un autre objectif de l'invention est de perfectionner les moyens sus-évoqués de levage et de manoeuvre du crochet de préhention et de proposer un mode de réalisation des dits moyens présentant des avantages sensibles par rapport aux moyens de déplacements connus.

Selon ce mode de réalisation, le vérin auxiliaire est disposé dans plan de la partie intermédiaire et est accouplé, d'une part, à cette partie intermédiaire, d'autre part, à une bièlle agencée pour pouvoir exercer une traction ou une poussée sur la partie avant afin de l'amener à pivoter respectivement vers l'arrière pour former un angle aigu avec la dite partie intermédiaire, ou vers l'avant pour former un angle obtus.

L'invention, son fonctionnement et ses avantages seront mieux compris à la lecture de la dèscription détaillée qui suit et à l'examen des dessins annèxés, correspondant à la réalisation:
- la figure 1 est une vue simplifiée d'un véhicule industriel équipé d'un dispositif conforme à l'invention, lequel est présenté par un plan vertical dont la partie supérieure est en coupe,
- la figure 2 est une vue de ce dispositif en position retourné apte à une préhension basse,
- la figure 3 est une vue du dispositif vérrouillé à une benne standard pendant la manoeuvre de bennage,
- la figure 4 est une vue du dispositif en position de fin de manoeuvre de levage d'une charge courte,
- la figure 5 est une vue du dispositif en fin de manoeuvre de chargement pour une benne courte positionnée sur l'arrière du véhicule porteur conformément au code de la route.
- la figure 6 est une vue du dispositif en fin de manoeuvre de chargement pour une benne évasée.

Les figures 7 et 8 schématisent le dispositif en cours de transfert d'une benne standard depuis un véhicule porteur à une remorque.

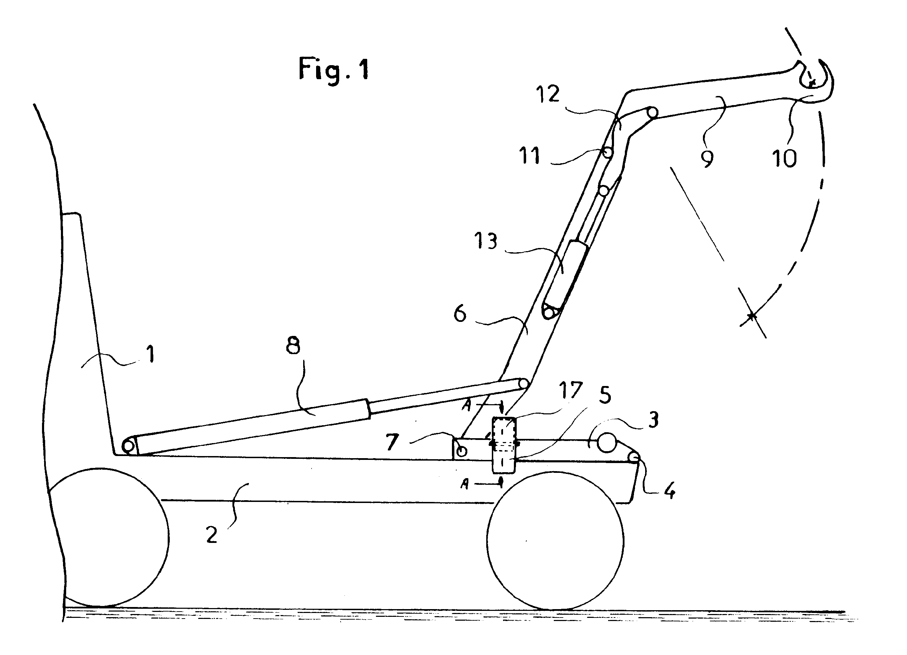

Le dispositif représenté à titre d'exemple aux figures 1,2,3,4,5 et 6, est dèstiné à équiper un véhicule industriel ou camion 1 doté d'un chassis 2, lequel supporte de façon traditionnelle un faux chassis (on assimilera donc ce faux chassis au chassis proprement dit, l'ensemble étant désigné par le terme chassis de camion 2).

Les bennes 14 sont construites traditionnellement sur des chassis 15 en majeure partie en profilés en I ou en profilés en U disposés sur chant, la partie avant de la benne est dotée d'un axe 16 pour sa préhension.

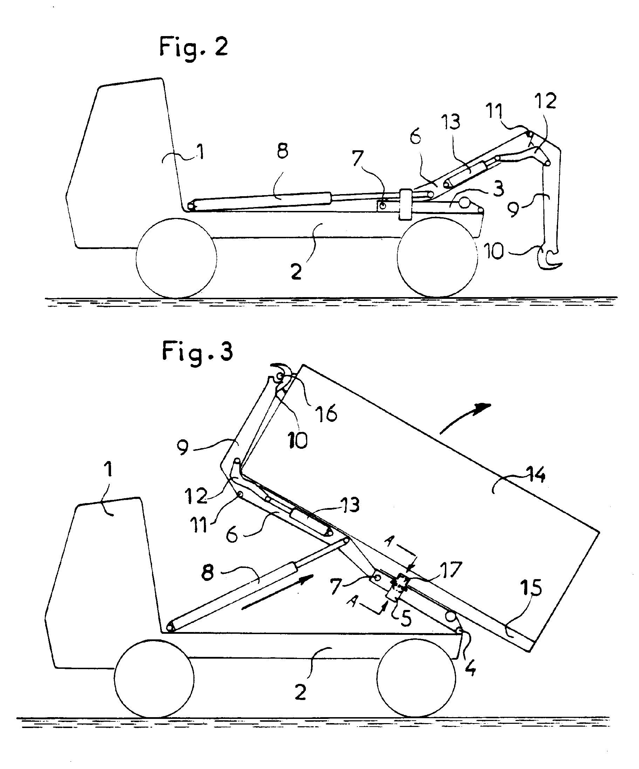

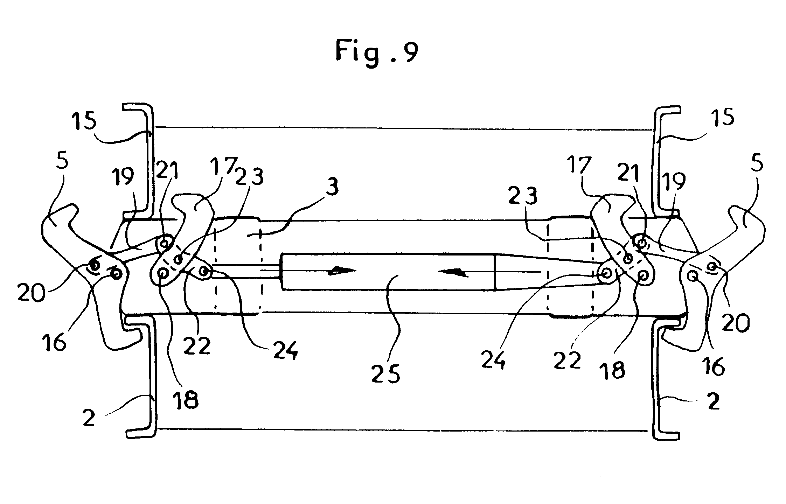

Les figures 9,10,11 et 12 sont l'illustration du dispositif de vérrouillage selon l'invention, correspondant à la coupe AA figure 1 et 3 exposant les différentes possibilités des moyens selon chaque cas cité à titre d'exemple.

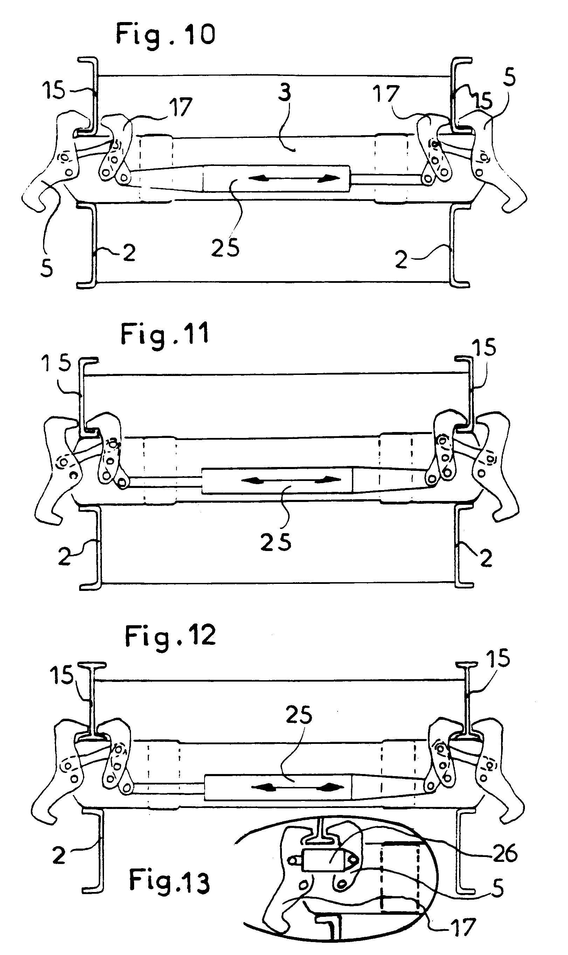

La figure 13, selon une variante, est l'illustration du même dispositif de vérrouillage sous forme d'un blos autonome.

Ce dispositif de vérrouillage selon l'invention comprend pour l'éssentiel, un crochet double 5 articulé 16 sur le basculeur inférieur 3 disposé en vis à vis d'un crochet simple 17 articulé 18 sur le même plan, et commandé par une biellette 19 articulée 20 à une extrémité sur le crochet double 5 et à l'autre extrémité 21 au sommet du balancier 22 lequel balancier est articulé 23 à un point intermédiaire dans le crochet 17 et est attelé à sa base 24 à un vérin 25 a double éffet disposé transversalement pour actionner les dispositifs de droite et de gauche simultanément.

Dans le mode de réalisation selon la variante figure 13, un vérin court 26 à double éffet est attelé directement entre le crochet double 5 et le crochet simple 17, l'opération de rapprochement simultané est ordonné par la pression hydraulique.

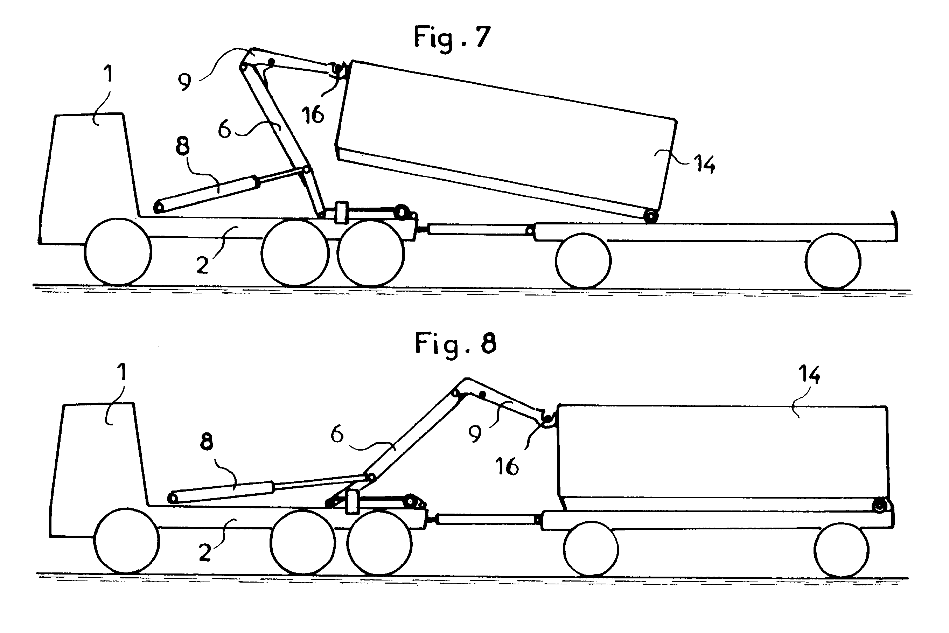

Comme il est indiqué à la figure 9, le vérin 25 est en position de traction actionnant l'ouverture des compas formés par les balanciers 22 en association avec les biellettes 19, lesquels compas agissent en poussée sur les crochets 5 et 17 pour l'ouverture des becs qui libèrent le chassis de benne 15 dans ce même mouvement les becs inférieur des crochets double 5 pincent le bord supérieur du chassis de camion 2, le chassis de benne 15 et le bras intermédiaire 6 du dispositif de levage sont alors libérés pour éffectuer une quelconque manoeuvre, figures 1,2,4 et 7.

Pour obtenir le bennage à partir de la position illustrée en figure 9 il suffit d'actionner le vérin 25 en position de poussée figures 10,11 et 12 pour provoquer un mouvement contraire, fermeture des compas formés par les biellettes 19 et les balanciers 22, lesquels compas agissent sur les crochets 17 et sur les becs supérieur des crochets 5 pour pincer les ailes du chassis de benne 15 en libérant le chassis de camion 2, le basculeur 3 le bras intermédiaire 6 et le chassis de benne 15 se trouvent longitudinalement solidaire figure 3.

Par ailleur, à l'arrière du chassis de camion 2 est articulé en 4 un basculeur 3 qui repose sur ce chassis 2 dans l'état de repos ou pendant les manoeuvres de pose et de dépose de benne ou de manutention et levage.

A l'avant du dit basculeur 3 est articulé 7 un bras intermédiaire 6 lui même articulé 11 à une membrure 9 qui supporte le crochet 10 de préhension.

Deux vérins de puissance a double éffet tel que 8, sont accouplés à l'avant du chassis 2 et sur le bras intermédiaire 6 de façon a manoeuvrer le système.

Un vérin auxiliaire 13 est disposé dans la partie intermédiaire 6 et accouplé, au dit bras intermédiaire 6 et à une bielle 12 agencée pour pouvoir exercer une traction ou une poussée sur le bras de préhension 9 jusqu'à un appuis sur l'axe 11 en position d'extension.

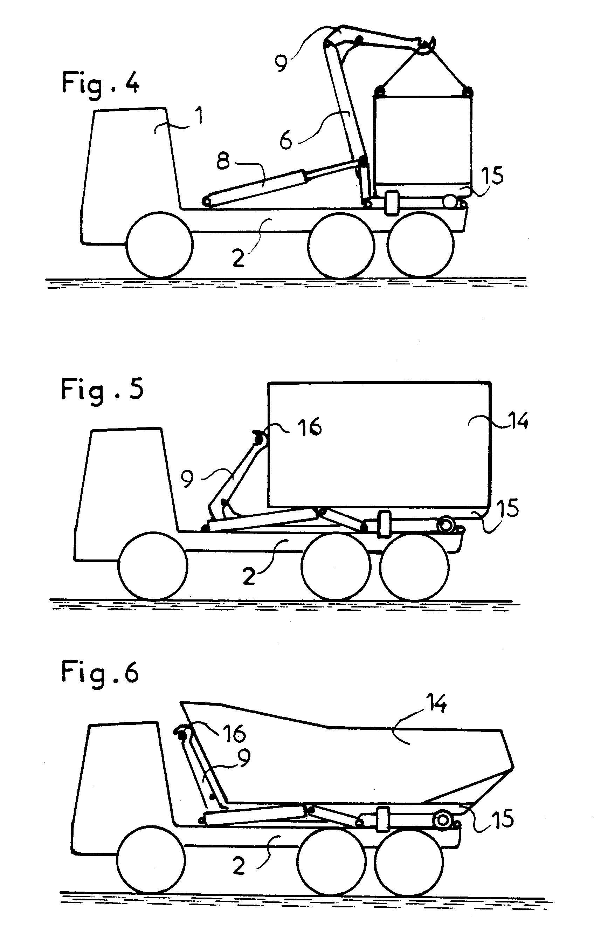

La partie avant, menbrure 9 et crochet de préhension 10, peut aussi ètre amenée à pivoter autour de l'axe 11 vers l'avant ou vers l'arrière, comme aux figures 5 et 6, ou de haut en bas lorsque le bras intermédiaire 6 est en position sensiblement verticale comme aux figures 1 et 4 pour le levage d'une charge.

La bielle 12 présente une forme allongée, sous laquelle est prévu une partie incurvée dèstinée à venir en appui sur l'axe 11 suivi vers l'avant d'une courbe vers le haut, apte à contourner l'angle avant inférieur d'une benne fig.3 et fig.6, puis d'un prolongement jusqu'à son point d'articulation sur le bras de préhension 9 à une distance suffisament écartée de l'articulation 11 de façon à transmettre la pleine puissance du vérin auxiliaire 13.

Le bras de préhension 9, présente une membrure coudée en angle obtus à la base, apte à contourner aussi bien un angle à 90° d'une benne classique fig.3 qu'un angle obtus d'une benne spéciale fig.6, jusqu'à obtenir un allignement du coude inférieur de la membrure 9 avec le bras intermédiaire 6 de part et d'autre de l'articulation 11, fig.1 en position de soulèvement d'une charge et fig.6 pendant le transport d'une benne spéciale, dans cette configuration la partie incurvée de la bielle est en appui sur la partie supérieure de l'axe 11 disposé en saillie de part et d'autre.

## Revendications

1. Dispositif de levage et de vérrouillage associé au chassis d'un véhicule (2) porteur d'une benne (14), du type comprenant au moins un basculeur (3) articulé (4) par son extrémité arrière, à l'arrière du chassis (2) suivi à son autre extrémité d'un bras intermédiaire (6) articulé (7) et d'un bras avant (9) avec son crochet de préhension (10) également pourvu d'une articulation (11), un vérin d'actionnement en mouvement angulaire (13) longitudinal disposé entre le bras intermédiaire (6) et le bras avant (9), des moyens de vérrouillage solidaires du basculeur (3) pourvus de part et d'autre, de parties d'accrochage à double crochet (5) soit sur le chassis (2) du véhicule (1) soit sur la chassis de benne (15) actionné par un moyen de puissance (25)(26) disposé transversalement, caractérisé en ce que le système de vérrouillage est constitué par la combinaison du double crochet (5) avec un crochet simple (17), articulés sur un même plan en vis à vis et reliés à leur partie haute par un moyen d'actionnement simultané permettant la prise de chassis disposés sur chant, en profilé en I ou en profilé en U.

2. Dispositif de levage selon revendication 1, caractérisé en ce que le moyen d'actionnement simultané des crochets (5 et 17) est obtenu par une biellette (19) articulée (20) dans la partie haute du crochet (5), et par un balancier (22) articulé (23) à sa partie intermédiaire dans la partie haute du crochet (17), le dit balancier (22) étant lui même relié d'une part aux extrémités (24) d'un vérin (25) disposé transversalement apte à entrainer les deux ensembles de vérrouillage dans deux situations: l'une, lorsque le dit vérin d'entrainement (25) est en traction pour l'ouverture des crochets, l'autre, lorsqu'il est en extension pour la fermeture simultanée des dits crochets sur la partie inférieure des profilés formant les chassis de bennes de tous modèles.

3. Dispositif de levage selon revendication 1, caractérisé en ce que le vérin d'actionnement (13) interposé entre le bras intermédiaire (6) et le bras avant (9) est relié au dit bras avant (9) par un bièlle (12) articulée d'un coté au vérin auxiliaire (13) disposé à l'intérieur du bras intermédiaire (6) et de l'autre au bras avant, ladite bièlle comportant une partie inférieure dèstinée à venir en appui sur l'axe (11) d'articulation du bras avant sur le bras intermédiaire de façon à assurer une rigidité de l'ensemble en position d'extension.

4. Dispositif de levage selon les revendications 1 et 3, caractérisé en ce que la bielle (12) présente, à partir d'un axe transversal, une partie allongée incurvée en dessous dèstinée à venir en appui sur l'axe (11) disposé en saillie de part et d'autre, suivi vers l'avant d'une courbe vers le haut et d'un prolongement jusqu'à un second axe transversal formant l'aspect général d'un angle à plus de 90°.

5. Dispositif de levage selon les revendications 1 et 2, caractérisé en ce que l'actionnement des crochets (5 et 17) est réalisé par un petit vérin (26) attelé directement sur le plan supérieur à leur axe de pivotement de façon à former deux ensembles séparés aptes à ètre disposés indépendament de part et d'autre du basculeur (3).

## Patentansprüche

1. Hubwerk und Feststellvorrichtung in Verbindung stehend mit dem Untergestell eines einen Wagenkasten (14) tragenden Fahrzeugs (2), Minimalausstattung des Modells mit mindestens einem, hinten beweglichen (4) Kipper (3), am anderen Ende des Untergestellhecks (2) ein beweglicher (7) Zwischenarm (6) und ein, ebenfalls mit einem Gelenkstück (11) versehener Vorderarm (9) mit Greifbaken (10), ein längsgerichteter Heber mit Winkelbewegung (13), der zwischen dem Zwischenarm (6) und dem Vorderarm (9) angebracht ist, mit dem Kipper (3) verbundene Feststellvorrichtungen, die auf beiden Seiten mit einer aus Doppelhaken (5) bestehenden Einhakvorrichtung versehen sind, womit am Untergestell (2) des Fahrzeugs (1) bzw. am Untergestell des Wagenkastens (15) eingehakt werden kann, mit Betätigung über einen querliegenden Heber (25)(26), der sich wiederum dadurch auszeichnet, daß das Feststellsystem aus einer Kombination des Doppelhakens (5) mit einem Einfachhaken (17) besteht, deren Gelenke auf gleicher Ebene, einander gegenüber liegend, gelagert sind, und die oben mit einem Simultanantrieb verbunden sind, wodurch ein Festgreifen mit der Schmalseite, mit Doppel-T-Profil bzw. aus U-Stahl, nach unten, am Untergestell ermöglicht wird.

2. Hubwerk gemäß Patentanspruch 1, das sich dadurch auszeichnet, daß eine Simultanbetätigung der Haken (5 und 17) mittels einer oben am Haken (5) befindlichen Anlenk-(20)-Pleuelstange (19), und mittels eines in seiner Mitte beweglichen (23) Schwingbebels am Haken (17) oben zustande kommt, wobei besagter Schwingbebel (22) selbst mit dem jeweiligen Endstück (24) eines querliegenden Hebers (25) verbunden ist, mit Hilfe dessen die beiden Feststellvorrichtungen zwei verschiedene Situationen bewirken können : in dem einen Fall wird besagter Antriebsheber (25), in Zugstellung gebracht um die Haken freizugeben, im anderen Fall befindet er sich in gestreckter Position, wodurch die gleichzeitige Schließung der Haken an der unteren Seite der Träger hervorgerufen wird, die das Untergestell des Wagenkastens aller Modelle bilden.

3. Hubwerk gemäß Patentanspruch 1, das sich dadurch auszeichnet, daß der Heber (13), der sich zwischen dem Zwischenarm (6) und dem Vorderarm (9) befindet, mit eben diesem Vorderarm (9) über eine bewegliche Pleuelstange (12) auf einer Seite des Hilfshebers (13), im Innern des Zwischenarms (6), und auf anderen Seite mit dem Vorderarm verbunden ist, wobei besagte Pleuelstange über ein Unterteil verfügt, das dazu bestimmt ist, den Gelenkbolzen (11) des Vorderarms gegen den Zwischenarm so abzustützen, daß eine Steifigkeit der Konstruktion in ausgestreckter Position gewährleistet ist.

4. Hubwerk gemäß der Patentansprüche 1 und 3, das sich dadurch auszeichnet, daß die Pleuelstange (12) von einer querliegenden Achse ausgehend, über eine nach unten hin gekrümmte Verlängerung verfügt, die dazu bestimmt ist, den auf beiden Seiten herausragenden Achsbolzen (11) abzustützen, und die vorne mit einer nach oben gerichteten Biegung und einer Verlängerung, die bis zu einer zweiten querliegenden Achse reicht, und somit eine Form mit einem Winkel von über 90° darstellt.

5. Hubwerk gemäß der Patentansprüche 1 und 2, das sich dadurch auszeichnet, daß die Betätigung der Haken (5 und 17) über eine kleine Spindel (26) ausgeführt wird, die direkt an die obere Seite der Schwenkbolzen gekuppelt ist, sodaß zwei getrennte Einheiten gebildet werden, die somit unabhängig voneinander auf beiden Seiten des Kippers (3) angebracht werden können.

## Claims

1. Lifting and locking mechanism associated with a vehicle chassis (2) carrying a tipping body (14), of a type including at least one rocking lever (3) articulated (4) on its rear end, at the rear of the chassis (2) followed at its other end by an intermediate arm (6) with an articulation (7) and a front arm (9) with its lifting hook (10) also equipped with an articulation (11), a jack ensuring lengthwise angular movement (13) situated between the intermediate arm (6) and the front arm (9), with locking mechanisms integrated into the rocking lever (3) fitted on both sides with double hook lifting devices (5) either on the vehicle (1) chassis (2) or on the tipping body (15) chassis activated by a power unit (25) (26) installed transversely, and characterised by the fact that the locking system comprises a combination of a double hook (5) with a single hook (17), articulated on the same plane and facing each other and connected on their upper part by a simultaneous activating device allowing securing of the chassis arranged edgewise, in I section or channel bar section.

2. Lifting mechanism as per Claim 1, characterised by the fact that the simultaneous activating mechanism for the hooks (5 and 17) is obtained by a pushrod (19) with an articulation (20) in the upper part of the hook (5) and a beam (22) with an articulation (23) in its intermediate part in the upper part of hook (17), which beam (22) is itself connected on one side to the ends (24) of a jack (25) fitted transversely so as to be able to drive the two locking assemblies in two situations : one when the said drive jack (25) is in traction to open the hooks, the other when it is extended to close simultaneously the said hooks on the lower part of the sections forming the tipping body chassis for all models.

3. Lifting mechanism as per claim 1, characterised by the fact that the drive jack (13) fitted between the intermediate arm (6) and the front arm (9) is connected to the said front arm (9) by a rod (12) articulated on one side of the auxiliary jack (13) fitted inside the intermediate arm (6) and on the other side to the front arm, the said rod including a lower part intended to come into contact with the articulation axis (11) of the front arm on the intermediate arm in order to ensure rigidity for the unit in the extended position.

4. Lifting mechanism as per claims 1 and 3, characterised by the fact that the rod (12) has, coming from a transverse axis, a lengthened curved part underneath designed to come into contact with the axis (11) jutting out on both sides, followed towards the front by a curve towards the top and an extension leading to the second transverse axis giving the general appearance of a angle greater than 90°.

5. Lifting mechanism as per claims 1 and 2, characterised by the fact that the activation of the hooks (5 and 17) is achieved through a small jack (26) harnessed directly on the upper part to their pivot axis so as to form two separate units capable of being fitted independently on either side of the rocking lever (3).
